(19) Europäisches Patentamt
European Patent Office
Office européen des brevets

(11) Veröffentlichungsnummer: **0 254 178 A2**

# (12) EUROPÄISCHE PATENTANMELDUNG

(21) Anmeldenummer: **87110120.0**

(22) Anmeldetag: **14.07.87**

(51) Int. Cl.[4]: **C08G 85/00**, G02F 1/35

(30) Priorität: **23.07.86 DE 3624898**

(43) Veröffentlichungstag der Anmeldung: **27.01.88 Patentblatt 88/04**

(84) Benannte Vertragsstaaten: **BE CH DE FR GB IT LI NL SE**

(71) Anmelder: **Merck Patent Gesellschaft mit beschränkter Haftung**
**Frankfurter Strasse 250**
**D-6100 Darmstadt(DE)**

(72) Erfinder: **Dorsch, Dieter, Dr.**
**Reuterallee 24**
**D-6100 Darmstadt(DE)**
Erfinder: **Eidenschink, Rudolf, Dr.**
**Konrad Adenauer Strasse 1**
**D-6109 Mühltal 1(DE)**
Erfinder: **Herz, Claus P., Dr.**
**Berghalde 20**
**D-6900 Heidelberg 1(DE)**

## (54) Orientierte Polymermaterialien.

(57) Durch ringöffnende Polymerisation cyclischer, polare Gruppen enthaltender Monomere werden parallel orientierte Polymermaterialien mit nicht-linearen optischen Eigenschaften.

EP 0 254 178 A2

## Orientierte Polymermaterialien

Die Erfindung betrifft neue Polymermaterialien mit nicht-linearen optischen Eigenschaften sowie Verfahren zu ihrer Herstellung.

Die nicht-lineare Optik beschäftigt sich mit der Wechselwirkung elektromagnetischer Felder in verschiedenen Medien und dem damit verbundenen Entstehen neuer Felder mit veränderten Eigenschaften. Materialien mit nicht-linearen optischen Eigenschaften besitzen eine feldstärkeabhängige dielektrische Suszeptibilität, die eine Reihe dispersiver Prozesse zur Folge hat: die Frequenzverdopplung (second harmonic generation = SHG) erlaubt die Erzeugung von Licht der verglichen mit dem eingestrahlten Licht halben Wellenlänge; der elektrooptische Effekt (Pockels-Effekt) ermöglicht eine Änderung des Brechungsindex bei angelegtem elektrischem Gleichstromfeld; Methoden der Summen-und Differenzfrequenzmischung sowie der Frequenzteilung gestatten die kontinuierliche Abstimmung von Laserlicht.

Eine Vielzahl technischer Anwendungen resultiert aus den voranstehend angeführten Effekten. Optische Schalter und Wellenleiter zur Konstruktion rein-optischer Computer, die Frequenz-und Intensitätssteuerung in der Lasertechnik, Holographie sowie die Bereiche der Informationsverarbeitung und integrierten Optik stellen Einsatzgebiete für Materialien mit nicht-linearen optischen Eigenschaften dar.

Um für die Anwendung im Bereich der nichtlinearen Optik geeignet zu sein, müssen derartige Materialien einer Reihe von Anforderungen genügen.

Neben einer nicht-zentrosymmetrischen Molekülanordnung im Kristall bedingt eine technische Brauchbarkeit möglichst hohe Werte für die dielektrische Suszeptibilität X.

Eine Reihe anorganischer Substanzen wie z.B. Kaliumdihydrogenphosphat oder Lithiumniobat zeigt nicht-lineare optische Eigenschaften. Alle diese Verbindungen sind jedoch mit den verschiedensten Nachteilen behaftet. Neben unzureichenden Werten für die dielektrische Suszeptibilität zweiter Ordnung mangelt es anorganischen Verbindungen häufig an einer genügenden Photostabilität bei der Behandlung mit hohen Lichtintensitäten oder, bedingt durch eine starke Farbigkeit, an ausreichender Transparenz.

Aus Garito et al., Laser Focus 18 (1982) und der EP-0091 838 sind organische Verbindungen vom Nitroanilintyp bekannt. Ihre verhältnismäßig guten Werte für die photochemische Stabilität und die dielektrische Suszeptibilität zweiter Ordnung gehen jedoch einher mit einer schlechten Kristallisierbarkeit und einer mangelhaften mechanischen Stabilität. Insbesondere die Herstellung dünner Schichten, wie von der integrierten Optik gefordert, gelingt mit diesen Materialien nicht.

Polymere zeichnen sich durch hohe mechanische Widerstandsfähigkeit und gute chemische Stabilität aus. Am Polymergerüst befestigte oder in Polymeren gelöste Moleküle mit nicht-linearen optischen Eigenschaften sollten daher in der nichtzentrosymmetrischen Umgebung vorteilhafte Werte für die dielektrische Suszeptibilität aufweisen.

Polymere mit Nichtlinearitäten zweiter Ordnung lassen sich herstellen, indem an über die Glastemperatur erhitzte, mit statistisch orientierten Molekülen dotierte Filme ein äußeres Feld angelegt wird. Dies führt zu einer Polung der eingelagerten Moleküle, die dem Polymermedium nach dessen Erstarren eine Anisotropie verleiht. Auf diese Weise hergestellte Polymere mit nicht-linearen optischen Eigenschaften, in denen p,p'-Dimethylaminonitrostilben als Wirtsmolekül Verwendung findet, wurden von Meredith et al., Macromolecules 15 (1982) 1385 beschrieben.

Shibaev et al., Polymer Communications 24 (1983) 364 teilen die feldinduzierte Ausrichtung flüssigkristalliner Polymerer mit mesogenen Seitengruppen mit.

Die US-Patentschrift 4 412 059 offenbart ein Polymermaterial mit cholesterischen Mesophasen, die mittels elektrischer oder magnetischer Felder einer kontrollierten Ausrichtung zugänglich sind. Schließlich sind aus der EP-0172012 vollaromatische, thermotrope, flüssigkristalline Polymere bekannt, deren nicht-lineare optische Eigenschaften ebenfalls durch äußere Felder hervorgerufen werden können.

Eine weitere Methode zur Erzeugung von Polymermaterialien mit nicht-linearen optischen Eigenschaften besteht in der Polymerisation von bereits geordneten, eine nicht-zentrosymmetrische Orientierung aufweisenden Monomeren, wobei der Ordnungszustand des Systems während der Polymerisation weitgehend erhalten bleibt. Für diese Technik geeignete Monomere sind beispielsweise der EP-0021695 zu entnehmen.

Die nach den voranstehend beschriebenen Verfahren erhaltenen Materialien zeigen noch unbefriedigende nicht-lineare optische Eigenschaften. Durch die Einwirkung eines äußeren Feldes, welches einen zusätzlichen Verfahrensschritt darstellt,oder durch Orientierungsverluste der vorgeordneten Monomeren während der Polymerisation, erfolgt nur eine unvollkommene Ausrichtung des Polymerverbandes.

Es besteht somit ein Bedürfnis nach auf eine Oberfläche aufgebrachten, orientierten Polymermaterialien sowie nach einem Verfahren zu deren Herstellung, das die geschilderten Nachteile nicht oder nur in geringerem Maße aufweist und das insbesondere ohne die Erfordernis zusätzlicher Verfahrensschritte eine Orientierung der Polymerenstruktur bereits während des Polymerisationsvorganges ermöglicht.

Diese Aufgabe wird gelöst durch die erfindungsgemäßen Polymermaterialien sowie durch Verfahren zu deren Herstellung.

Gegenstand der Erfindung sind daher auf eine Oberfläche aufgebrachte, aus polaren Monomereinheiten bestehende Polymermaterialien, dadurch gekennzeichnet, daß die Monomereinheiten und die Polymerhauptketten eine zur Substratoberfläche vorzugsweise parallele Orientierung aufweisen. Bei einer besonders bevorzugten Gruppe der erfindungsgemäßen Polymermaterialien sind die Monomereinheiten vorzugsweise dipolar ausgerichtet. Der Grad der Parallelorientierung beträgt vorzugsweise mindestens etwa 60 % bei einer Winkelabweichung von der Waagerechten von höchstens etwa 10°, insbesondere etwa 80 % bei einer Winkelabweichung von etwa 5°.

Gegenstand der Erfindung ist ferner ein Verfahren zur Herstellung derartiger Polymermaterialien, indem man zu ringöffnender Polymerisation befähigte, polare Gruppen enthaltende, cyclische Monomere einer zonenförmigen, der bevorzugten Polymerwachstumsrichtung folgenden Bestrahlung ausgesetzt.

Nach diesen Verfahren erhaltene Polymermaterialien eignen sich als optisch nicht-lineare Medien.

Die ringöffnende Polymerisation cyclischer Monomerer ist bekannt. So werden in Frisch, Reegen (Hrsg.), Ring-opening Polymerization, Marcel Dekker, New York, 1969, Saegusa, Goethals (Hrsg.), Radical Polymerization, American Chemical Society, Washington, 1977 sowie Yvin, Saegusa (Hrsg.), Ring-Opening Polymerization, Elsevier, London, 1984, Verfahren zur ionischen Ringöffnung und nachfolgenden Polymerisation von beispielsweise Ethylenoxid, Tetrahydrofuran, Caprolacton und Caprolactam beschrieben.

Radikalischer Ringöffnung und Polymerisation zugängliche Monomere sind z.B. Bicyclobutane (Hall, Ykman, J. Macromol. Sci, Rev. Macromol. Chem. 11 (1976), Olefine (Errede, J. Polym. Sci., 49 (1961) 253), Spiroorthocarbonate (Endo, Bailey, J. Polym. Sci., Polym. Lett. Ed. 18 (1980) 25) oder cyclische Ketenacetale (Endo et al., Makromol.Chem. 186 (1985) 1543); wobei die Radikalbildung auf thermischem oder photochemischem Weg erfolgen kann.

Es wurde nun überraschenderweise gefunden, daß durch eine zonenförmige, der bevorzugten Polymerwachstumsrichtung folgende Bestrahlung initiierte ringöffnende Polymerisation polare Gruppen enthaltender, cyclischer Monomeren der allgemeinen Formel I,

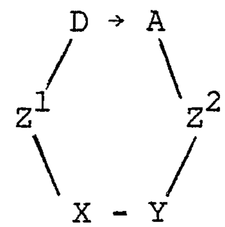

I

worin D → A ein polare Gruppen enthaltendes Molekülfragment, $Z^1$ und $Z^2$ eine unsubstiuierte oder substituierte Kohlenstoffkette, in der gegebenenfalls ein oder mehrere C-Atome durch Heteroatome ersetzt sind, und X - Y eine unter Erzeugung polymerisationsfähiger Fragmente spaltbare Gruppe bedeuten, neuartige Polymermaterialien erhalten werden, deren Monomereinheiten und Polymerhauptketten zur Substratoberfläche vorzugsweise parallele Orientierung aufweisen. Derartige Polymermaterialien eignen sich in hervorragender Weise als nicht-lineare optische Medien.

Die Ausführung der Reaktion gestaltet sich einfach. In den zu polymerisierenden cyclischen Monomeren der Formel I besitzt in dem polare Gruppen enthaltenden Molekülfragment D → A D die Eigenschaften einer Elektronendonorgruppe, wie z.B. eine Amino-, Ether-, Phosphin-oder Alkoholgruppe, A die Eigenschaften einer Elektronenakzeptorgruppe, wie z.B. eine Nitro-, Cyano-, Ester-oder Anhydridgruppe, ein Chinon oder Halogen. Vorzugsweise bedeutet A eine Amino-oder Alkoholgruppe, B eine Nitro-oder Estergruppe.

Vorgenannte Gruppen befinden sich an einem organischen Gerüst, vorzugsweise einem aromatischen System. Hierfür geeignete Systeme sind beispielsweise in 1,2-oder 1,4-Stellung durch die Gruppen D und A substituiertes Benzol, in 4,4'-Stellung substituiertes Biphenyl oder Stilben oder in 2,6-Stellung substituiertes Naphthalin.

$Z^1$ und $Z^2$ repräsentieren eine Alkylkette mit 1 bis 18 C-Atomen, in der auch eine oder mehrere $CH_2$-Gruppen durch -O-, -CO-, -CO-O-, -NH-, -N-(Alkyl)-oder -CH=CH-substituiert sein können. -O-, -CO-O-und -NH-sind als ersetzende Gruppen bevorzugt.

Die unter Erzeugung polymerisationsfähiger Fragmente spaltbare Gruppe X-Y bezeichnet ein radikalisch, ionisch oder thermisch spaltbares Strukturelement, wie z.B. Peroxide (X-Y = O-O),

cyclische Orthoester (O-CHR-O; R = organischer Rest), cyclische Orthocarbonate ($O-C(OR)_2-O$) oder Ketenacetale ($O-C(=CR_2)-O$), wobei letztere eine bevorzugte Gruppe X-Y darstellen.

Cyclische Monomere mit diesen reaktiven Gruppen sind nach den aus den voranstehend angegebenen Schriften entnehmbaren Vorschriften oder nach an sich bekannten Methoden erhältlich, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

So sind beispielsweise die besonders bevorzugten Monomeren der Formel I, in den X-Y eine Ketenacetalfunktion bedeutet, aus 2-Halogenmethyl-1,3-dioxacycloverbindungen durch Einwirkung einer starken Base wie z.B. Natriumamid oder Kalium-tert.-butanolat in einem inerten Lösungsmittel erhältlich.

Die zur Auslösung der Polymerisation erforderlichen Photoinitiatoren werden den Monomeren durch einfaches Lösen oder Einrühren zugesetzt.

Zur Auslösung der Polymerisation geeignet ist eine Vielzahl bekannter Initiatoren, wie z.B. in Pappas (Hrsg.), UV Curing: Science and Technology, Technology Marketing Corp., Stamford, CT, 1978, oder in Ocian, Principles of Polymerization, McGraw-Hill, New York, beschrieben. Beispiele für thermisch zerfallende, radikalische Initiatoren sind Perverbindungen wie Kaliumpersulfat, Dibenzoylperoxid und Cyclohexanonperoxid, für durch Strahlungs einwirkung zerfallende Initiatoren Benzophenone wie z.B. Michlers Keton [4,4'-Bis-(dimethylamino)benzophenon], 4,4'-Bis-(diäthylamino)benzophenon, p-Dimethylaminobenzophenon, p-Chlorbenzophenon, Benzophenon; Anthrachinone wie z.B. Anthrachinon, 2-Chloranthrachinon, 2-Alkylanthrachinone; Xanthone wie z.B. 2-Halogenxanthone oder 2-Alkylxanthone; Thioxanthone wie 2-Chlorthioxanthon, 2-Alkylthioxanthone; Acridanone wie z.B. 2-Alkylacridanone oder N-substituierte Acridanone; Benzoine wie z.B. p-Dimethylaminobenzoin und Alkylether des Benzoins; Benzilketale, α-Halogenketone, Dialkoxyacetophenone, α-Hydroxyalkylphenone und α-Aminoalkylphenone wie sie beispielsweise in der DE-OS 27 22 264 und in der EP-OS 3003 beschrieben sind, weiterhin z.B. Fluorenone, Dibenzosuberone, Phenanthrenchinone, Benzoesäureester wie z.B. Hydroxypropylbenzoat, Benzoylbenzoatacrylat sowie Oniumsalze wie z.B. Diaryliodonium-oder Triarylsulfoniumsalze.

Ionische Katalysatoren sind z.B. Hydroxide wie Kaliumhydroxid, alkali-organische Verbindungen wie Phenyllithium und Naphthalinnatrium, Lewissäuren wie $BF_3$, $AlCl_3$, $SnCl_4$ und $TiCl_4$, Metallkomplexe in Form von Aluminium-oder Titanverbindungen und starke Säuren wie Fluorsulfonsäure.

Die Photoinitiatoren werden den Monomeren in der Regel in Mengen von 0,1 bis 20 Gew. %, vorzugsweise 0,5 bis 12 Gew. % zugesetzt.

Mit den photopolymerisierbaren cyclischen Monomeren können erforderlichenfalls eine Reihe von Zusatzstoffen eingesetzt werden.

Als Reaktionsbeschleuniger können beispielsweise organische Amine, Phosphine, Alkohole und/oder Thiole, die alle mindestens eine zum Heteroatom α-ständige CH-Gruppe aufweisen, zugesetzt werden. Geeignet sind z. B. primäre, sekundäre und tertiäre aliphatische, aromatische, araliphatische oder heterocyclische Amine, wie sie z. B. in der US-PS 3,759,807 beschrieben sind. Beispiele für solche Amine sind Butylamin, Dibutylamin, Tributylamin, Cyclohexylamin, Benzyldimethylamin, Dicyclohexylamin, Triethanolamin, N-Methyldiethanolamin, Phenyl-diethanolamin, Piperidin, Piperazin, Morpholin, Pyridin, Chinolin, p-Dimethylaminobenzoesäureethylester, p-Dimethylaminobenzoesäurebutylester, 4,4'-Bis-dimethylamino-benzophenon (Michlers Keton) oder 4,4'-Bis-diethylamino-benzophenon. Besonders bevorzugt sind tertiäre Amine wie beispielsweise Trimethylamin, Tri-isopropylamin, Tributylamin, Octyl-dimethylamin, Dodecyl-dimethylamin, Triethanolamin, N-Methyl-diethanolamin, N-Butyl-diethanolamin, Tris-(hydroxypropyl)amin, Dimethylaminobenzoesäurealkylester.

Weiterhin kommen als Reaktionsbeschleuniger beispielsweise Trialkylphosphine, sekundäre Alkohole und Thiole in Frage.

Auch können geringe Mengen von Lichtstabilisatoren, wie beispielsweise Benzophenon-Derivate, BenztriazolDerivate, Tetraalkylpiperidine oder Phenylsalicylate, zugesetzt werden.

Je nach Einsatzzweck eignen sich organische Zusatzstoffe, wie Thixotropiemittel, Verlaufsmittel, Bindemittel, Gleitmittel, Mattierungsmittel, Weichmacher, Netzmittel, Silikone zur Verbesserung der Oberflächenbeschaffenheit, Antiausschwimmittel oder geringe Mengen an Lösungsmitteln als Zusatz zu den zu polymerisierenden cyclischen Monomeren.

Die Photopolymerisation erfolgt nach an sich bekannten Methoden durch Bestrahlen mit Licht oder UV-Strahlung des Wellenlängenbereichs von 250 bis 500 nm, vorzugsweise von 300 bis 400 nm. Als Strahlenquellen können Sonnenlicht oder künstliche Strahler verwendet werden. Vorteilhaft

sind z. B. Quecksilberdampf-Hochdruck-, -Mitteldruck-oder -Niederdrucklampen, Xenon-und Wolframlampen; Laser-Lichtquellen können ebenfalls eingesetzt werden.

Weiterhin eignet sich energiereiche Strahlung wie beispielsweise Röntgen-, Elektronen-, Neutronen-und andere Kernstrahlung zur Polymerisationsauslösung, wobei die Menge an zugesetztem Photoinitiator üblicherweise verringert bzw. darauf gänzlich verzichtet werden kann.

Die thermische Polymerisation gelingt beispielsweise durch Behandeln mittels Ultraschall oder Mikrowellen oder durch Einwirkung von IR-Stellung.

Bei dem erfindungsgemäßen Verfahren zur ringöffnenden Polymerisation cyclischer Monomerer werden diese in der gewünschten Schichtdicke gegebenenfalls nach Zusatz eines oder mehrerer der oben erwähnten Additive durch beispielsweise Bestreichen, Bedrucken oder Tauchen, falls erforderlich nach vorherigem Lösen in einem geeigneten Lösungsmittel, in der gewünschten Schichtdicke auf ein Substrat aufgebracht und einer zonenförmigen, der bevorzugten Polymerwachstumsrichtung folgenden Bestrahlung mit z. B. einer der voranstehend angegebenen Strahlungsquellen ausgesetzt.

Die bestrahlte Monomerenfläche wird dabei zonenartig begrenzt, zweckmäßigerweise durch eine zwischen Strahlungsquelle und Monomerschicht gelegte, entsprechend ausgebildete Maske, Blende oder insbesondere spaltförmige Öffnung oder durch eine optische Anordnung im Strahlengang. Die bestrahlte Zone folgt der Polymerisationsrichtung mit einer dem Fortschreiten der Polymerisation vergleichbaren Geschwindigkeit, wobei die hierzu erforderliche Relativgeschwindigkeit der Bestrahlungszone bezüglich der Monomerschicht entweder durch eine Bewegung der strahlungsdurchlässigen Öffnung über die Monomerschicht hinweg oder durch einen Transport des Substrats, beispielsweise auf einem Laufband, unter der Strahlungsquelle vorbei bewirkt wird. In beiden Fällen erfolgt die Polymerisation vorzugsweise in Richtung der relativ fortschreitenden Bestrahlung, wodurch die Polymerhauptketten und Monomereinheiten eine zur Substratoberfläche vorzugsweise parallele Orientierung aufweisen. So hergestellte Polymermaterialien weisen vorteilhafte Werte für die dielektrische Suszeptibilität zweiter Ordnung auf; sie zeigen eine günstige Transparenz und besitzen hohe Stabilitäten gegenüber mechanischen, chemischen und aktinischen Einflüssen.

Die erfindungsgemäßen Polymermaterialien erschließen aufgrund ihrer vorteilhaften nicht-linearen optischen Eigenschaften ein weites Anwendungsfeld. Insbesondere eignen sie sich zur Frequenzverdoppelung von Laserlicht sowie zur Herstellung von Schaltelementen, Wellenleitern und Phasenmodulatoren auf dem Gebiet der integrierten Optik.

Zur Erläuterung der Erfindung dienen folgende Beispiele:

Beispiel 1

Herstellung der Ausgangsmaterialien

a) Eine Lösung von 26,6 g 4'-(6-Hydroxyhexyloxy)-(1,1')-biphenyl-4-carbonsäure, 16 g Epoxystyrol und 16 g Triethylamin in 300 ml Tetrahydrofuran wird 140 Std. zum Sieden erhitzt. Man verdünnt mit 1000 ml Dichlor methan, wäscht zweimal mit 2 N Salzsäure und trocknet über Natriumsulfat. Nach Einengen unter vermindertem Druck wird der Rückstand aus Ethanol kristallisiert. Man erhält 2-Hydroxy-2-phenylethyl-(4'-(6-hydroxyhexyloxy)-(1,1')-biphenyl-4-carboxylat); F: 148-150°.

b) Ein Gemisch aus 6,1 g 2-Hydroxy-2-phenylethyl-(4'-(6-hydroxyhexyloxy)-(1,1')-biphenyl-carboxylat), 4,4 g Chloracetaldehyddimethylacetal und 3 mg p-Toluolsulfonsäure wird 2 Tage auf einer Temperatur von 140° gehalten. Während der Reaktion gebildetes Methanol wird dabei kontinuierlich abdestilliert. Nach Trocknen unter vermindertem Druck erhält man das cyclische Acetal 9-Chlormethyl-14-oxo-11-phenyl-1,8,10,13-tetraoxa-[14](4,4')-biphenylophan als zähes Öl.

c) Eine Lösung von 1,98 g 9-Chlormethyl-14-oxo-11-phenyl-1,8,10,13-tetraoxa[14](4,4')-biphenylophan, 532 mg Kalium-tert. butanolat und 8 ml tert. Butanol wird 24 Std. auf 80° erhitzt. Nach Zugabe von 12 ml Petrolether trennt man das ausgefallene Kaliumchlorid über ein Membranfilter ab. Das Filtrat wird eingeengt und unter vermindertem Druck getrocknet. Es hinterbleibt 9-Methylen-14-oxo-11-phenyl-1,8,10,13-tetraoxa[14](4,4')-biphenylophan als zähes, farbloses Öl.

Beispiel 2

Auf ein Glassubstrat wird eine Lösung des cyclischen Ketenacetals (50 Gew. %) 9-Methylen-14-oxo-11-phenyl-1,8,10,13-tetraoxa[14](4,4')-biphenylophan aus Beispiel 1c und 1 Gew. % O-Isopropylbenzoin in Tetrahydrofuran mittels der Spin-Coating-Technik aufgeschleudert und 5 Minuten bei 50° getrocknet.

Oberhalb der Schicht wird im Abstand von 2 mm eine bewegliche Maske mit einer spaltförmigen, 1 mm breiten Öffnung befestigt. Die Maske wird mit UV-Licht einer Quecksilberdampfhochdrucklampe bestrahlt und dabei mit einer Relativgeschwindigkeit von 0,5 mm/sec über die Schicht hinwegbewegt. Es wird ein farbloser, festhaftender Polymerfilm gebildet, dessen Polymerhauptketten und Monomereinheiten zur Substratoberfläche in hohem Maße parallel orientiert sind und der ausgeprägte, nicht-lineare optische Eigenschaften besitzt.

## Ansprüche

1. Auf eine Oberfläche aufgebrachte, aus polaren Monomereinheiten bestehende Polymermaterialien, dadurch gekennzeichnet, daß die Monomereinheiten und die Polymerhauptketten eine zur Substratoberfläche vorzugsweise parallele Orientierung aufweisen.

2. Polymermaterialien gemäß Patentanspruch 1, dadurch gekennzeichnet, daß die Monomereinheiten eine vorzugsweise dipolare Ausrichtung aufweisen.

3. Verfahren zur Herstellung von Polymermaterialien gemäß Patentanspruch 1, indem man zu ringöffnender Polymerisation befähigte polare Gruppen enthaltende, cyclische Monomere einer zonenförmigen, der bevorzugten Polymerwachstumsrichtung folgenden Bestrahlung aussetzt.

4. Verwendung von Polymermaterialien gemäß Patentanspruch 1 als nicht-lineare optische Medien.